# EUROPÄISCHE PATENTSCHRIFT

(11) **EP 2 749 458 B1**
(45) Veröffentlichungstag und Bekanntmachung des Hinweises auf die Patenterteilung: **15.04.2015**
(21) Anmeldenummer: 12199659.9
(22) Anmeldetag: 28.12.2012
(51) Int. Cl.: B60R 21/2165

(54) **Verkleidungsteil mit Airbagabdeckung und Verfahren zur Herstellung eines Verkleidungsteils**
Trim with airbag cover and method for manufacturing a trim part
Élément d'habillage avec recouvrement d'un coussin gonflable et procédé de fabrication d'un élément d'habillage

(43) Veröffentlichungstag der Anmeldung: 02.07.2014
(73) Patentinhaber: Faurecia Innenraum Systeme GmbH, 76767 Hagenbach (DE)
(72) Erfinder: Walter, Michael, 76228 Karlsruhe (DE); Bühler, Wolfram, 76227 Durlach/Aue (DE)
(74) Vertreter: Pfenning, Meinig & Partner GbR

(56) Entgegenhaltungen:
- EP-A1- 0 832 788
- EP-A1- 2 163 437
- EP-A2- 1 980 455
- EP-B1- 1 745 989
- WO-A1-2010/057679
- WO-A1-2011/083032
- DE-A1- 10 241 930
- DE-A1-102009 043 498
- US-B1- 6 753 057

## Beschreibung

Die vorliegende Erfindung betrifft ein Verkleidungsteil mit einer Airbagabdeckung, insbesondere zur Verwendung in Kraftfahrzeugen, mit einem Träger, einer Haptikschicht und einer die Haptikschicht und den Träger überdeckenden Dekorschicht aus Leder nach dem Obergriff des Hauptanspruchs. Außerdem betrifft die Erfindung ein Verfahren zur Herstellung eines solchen Verkleidungsteils.

Aus dem Stand der Technik sind Airbagabdeckungen mit unsichtbarer Aufreißlinie bekannt, beispielsweise aus der Druckschrift EP 1745989 B1. Bei Airbagabdeckungen dieser Art wird eine lokale Schwächung in eine lederne Dekorschicht eingebracht, um ein kontrolliertes Aufklappen der Airbagklappe entlang einer Aufreißlinie zu gewährleisten. Wie sich herausgestellt hat, ist es jedoch schwierig sicherzustellen, dass die Aufreißlinie auch bei einer Alterung der Dekorschicht an einer Sichtseite der Airbagabdeckung unsichtbar bleibt und sich nicht mit der Zeit dort abzeichnet.

Ein gattungsgemäßes Verkleidungsteil gemäß dem Oberbegriff des Anspruches 1 ist in der DE 102 41 930 A1 gezeigt.

Der vorliegenden Erfindung liegt die Aufgabe zugrunde, ein vergleichbares Verkleidungsteil mit einer nicht als solcher erkennbaren Airbagabdeckung zu entwickeln, wobei eine Aufreißlinie für den Airbag auch nach einer Alterung des Verkleidungsteils unsichtbar bleiben soll. Der Erfindung liegt ferner die Aufgabe zugrunde, ein Verfahren zur Herstellung eines Verkleidungsteils mit diesen Eigenschaften zur Verfügung zu stellen.

Diese Aufgabe wird erfindungsgemäß durch ein Verkleidungsteil mit den Merkmalen des Hauptanspruchs 1 sowie ein Verfahren mit den Merkmalen des Nebenanspruchs 9 gelöst. Vorteilhafte Ausgestaltungen der Erfindung ergeben sich mit den Merkmalen der Unteransprüche.

Das vorgeschlagene Verkleidungsteil mit einer Airbagabdeckung, insbesondere zur Verwendung in einem Kraftfahrzeug, umfasst einen Träger und eine Haptikschicht, die entlang einer die Airbagabdeckung begrenzenden Aufreißlinie geschwächt sind, und eine den Träger und die Haptikschicht überdeckende Dekorschicht aus Leder, wobei zusätzlich zwischen der Haptikschicht und der Dekorschicht eine Verstärkungsschicht angeordnet ist. Erfindungsgemäß weisen dabei die Dekorschicht und die Verstärkungsschicht beide jeweils eine konstante Dicke auf, sind also ohne lokale Schwächung längs der Aufreißlinie ausgeführt.

Durch die konstante Dicke der Dekorschicht und der sich darunter befindenden Verstärkungsschicht wird eine sichtbare lokale Veränderung einer Oberfläche der Dekorschicht bei Alterung, beispielsweise durch Temperaturänderungen, Luftfeuchtigkeit, Austrocknung, Schrumpfung oder Sonneneinstrahlung, vermieden, sodass die Aufreißlinie langfristig unsichtbar bleibt. Hierbei stabilisiert die zwischen der Dekorschicht und der Haptikschicht vorgesehene Verstärkungsschicht die Dekorschicht und erlaubt es, die Dekorschicht als ganze so dünn auszuführen, dass ein kontrolliertes Aufreißen der Airbagabdeckung gewährleistet bleibt.

Eine konstante Dicke der Dekorschicht ist einfacher zu realisieren als eine lokale, längs der Aufreißlinie verlaufende Schwächung in der Dekorschicht. Für eine lokale Schwächung in der Dekorschicht sind weitere Bearbeitungsschritte vonnöten. Durch die konstante Dicke der Dekorschicht werden kosten- und zeitaufwendige Schritte im Bearbeitungsprozess umgangen. Außerdem können hierdurch Spaltmaße leichter eingehalten werden.

Ferner erstrecken sich die Dekorschicht und die Verstärkungsschicht nur über einen Teilbereich des Verkleidungsteils. Das Verkleidungsteil weist ein über dem Träger und der Haptikschicht angeordnetes Oberflächendekor auf, das in diesem Teilbereich durch die genannte Dekorschicht und die Verstärkungsschicht und in mindestens einem an den Teilbereich angrenzenden Bereich durch eine einzelne Lage aus Leder gebildet ist. Ein Verbund aus der Dekorschicht und der Verstärkungsschicht weist eine Dicke auf, die der Dicke der genannten Lage aus Leder entspricht. Dadurch ergibt sich eine homogene Dicke des sich über den Teilbereich und den mindestens einen daran angrenzenden Bereich erstreckenden Oberflächendekors. Ein optischer Unterschied und ein auffälliger Höhensprung zwischen dem Teilbereich und dem angrenzenden Bereich werden dadurch vermieden, ohne dass die Haptikschicht dazu in dem genannten Teilbereich und dem mindestens einen daran angrenzenden Bereich unterschiedlich ausgeführt werden müsste. Im Sinne der vorliegenden Schrift seien Schichten oder Lagen oder Verbünde dabei auch dann noch als von gleicher Dicke bezeichnet, wenn ihre Dicken geringfügig, nicht jedoch um mehr als 10% - vorzugsweise nicht mehr als 5% - voneinander abweichen.

Die Dekorschicht und die Verstärkungsschicht können zu einem Verbund verklebt sein. Hierbei ist es besonders vorteilhaft, wenn eine Klebeverbindung zwischen der Dekorschicht und der Verstärkungsschicht so stark ist, dass der genannte Verbund bei einer durch einen Airbagschuss verursachbaren Zugbelastung längs der Aufreißlinie reißt, ohne dass sich die Klebeverbindung löst. Hierdurch wird ein Aufreißen des Verbunds entlang der Aufreißlinie unterstützt. Ein weiterer Vorteil einer Verklebung der Dekorschicht mit der Verstärkungsschicht besteht darin, dass der Verbund einfach mit der Lage vernäht werden kann.

Mit den beschriebenen Maßnahmen wird mit dem Verbund aus Dekorschicht und Verstärkungsschicht auch eine besonders einfach zu bearbeitende Oberflächenschicht aus Leder bereitgestellt, die - auch wenn die lederne Dekorschicht auf eine ausgesprochen dünne Restdicke reduziert wird - dieselbe Dicke wie ein herkömmliches Dekor auch Echtleder, aber eine geringere Reißkraft als dasselbe hat. Weiterhin ist es - verglichen mit herkömmlichen Herstellungsverfahren für zur Abdeckung von Airbagöffnungen geeignete Oberflächendekore aus Leder - für die Herstellung wesentlich einfacher, wenn eine große Fläche gespaltenen Leders mit einem Textil hinterklebt wird, um den Verbund mit den gewünschten Eigenschaften bereit zu stellen. Dieser Verbund muss nicht in aufwändiger Weise lokal geschwächt werden, besonders gestaltete Sollbruchstellen sind hier nicht erforderlich. Bei der beschriebenen Ausführung des Verbunds aus lederner Dekorschicht und typischerweise textilerVerstärkungsschicht genügt es vielmehr, wenn der Träger und die Haptikschicht eine lokale Schwächung längs der Aufreißlinie zeigen.

Auch in der weiteren Bearbeitung, also beim Kaschieren der Airbagabdeckung, ergeben sich Vorteile bei Verwendung des beschriebenen Verbunds. Da weder die lederne Dekorschicht noch die Verstärkugnsschicht mit einer lokalen Schwächung versehen sind, ist es nämlich auch nicht erforderlich, geschwächte Reißlinien sorgfältig übereinander zu legen, also z.B. eine Perforierung im Dekor mit der Schwächung in Haptikschicht und Träger in Deckung zu bringen. Der gesamte Leder-Textil-Verbund kann also einfach über die Airbagabdeckung gelegt werden. Der Arbeitsschritt zum Aufbringen des Lederdekors auf das Verkleidungsteil ist daher weiniger zeitaufwändig und damit günstiger.

Ein sicheres Öffnen der Airbagabdeckung und kontrolliertes Aufreißen des Verkleidungsteils einschließlich des Verbundes im Fall einer Airbagausläsung ist trotzdem gewährleistet, weil die Zugkräfte innerhalb des Verbundes dort, wo die darunterliegende Haptikschicht geschwächt ist, deutlich größer sind als an anderen Stellen, wo der Verbund mit der Haptikschicht verbunden ist. Das ist auch der Grund dafür, warum eine lokale Schwächung der Dekorschicht selbst und auch eine lokale Schwächung der sogenannten Verstärkungsschicht längs der Aufreißlinie gerade nicht erforderlich ist.

Bei der zuvor beschriebenen Ausführung, bei der die mit der Verstärkungsschicht hinterlegte Dekorschicht nur einen Teilbereich überdeckt, kann der den Teilbereich überdeckende Verbund mit der den angrenzenden Bereich bedeckenden Lage verbunden, vorzugweise genäht, werden, ohne das weitere Maßnahmen zum Erreichen einer homogenen Dicke des gesamten Verkleidungsteils ergriffen werden müssen. Das Oberflächendekor, bestehend aus dem Verbund und der Lage, kann dann zudem einfach auf die Haptikschicht aufgebracht werden.

Bevorzugt ist die Reißfestigkeit des Verbunds geringer als die Reißfestigkeit der Lage. Hierdurch wird ein kontrolliertes Aufreißen der Airgababdeckung auch ohne lokale Schwächung der Dekorschicht sichergestellt. Die Reißfestigkeit eines flächigen Gebildes sei dabei jeweils definiert als die Kraft, die innerhalb einer durch das flächige Gebilde definierten Ebene aufzubringen ist, um dieses über eine bestimmte Länge quer zur Zugrichtung reißen zu lassen, geteilt durch diese Länge.

Bevorzugt kann die Verstärkungsschicht mindestens eine bevorzugte Reißrichtung aufweisen, längs derer sie leichter einreißt als längs anderer Richtungen, wobei die Aufreißlinie im Träger und der Haptikschicht zumindest in einem Abschnitt parallel zur bevorzugten Reißrichtung oder parallel zu einer der bevorzugten Reißrichtungen verläuft. Auch dadurch kann ein kontrolliertes Aufreißen der Airbagabdeckung entlang der Aufreißlinie begünstigt werden. Wenn die Aufreißlinie U-förmig oder H-förmig ist, wie es häufig der Fall sein wird, dann kann die Verstärkungsschicht bzw. der Verbund so angeordnet bzw. aufkaschiert werden, dass die Aufreißlinie zumindest fast überall parallel zu einer der bevorzugten Reißrichtungen verläuft. Typischerweise wird es nämlich zwei senkrecht zueinander stehende bevorzugte Reißrichtungen geben, die z.B. durch eine Richtung von Kett- bzw. Schussfäden definiert sind.

In einer besonders bevorzugten Ausführung besteht die Verstärkungsschicht aus einem Textil, beispielsweise aus einem Gewebe. Dann kann eine Richtung von Kett- und/oder Schussfäden des Gewebes jeweils eine bevorzugte Reißrichtung definieren, längs derer die Verstärkungsschicht leichter einreißt als längs anderer Richtungen. Sofern das Gewebe so orientiert wird, dass die Aufreißlinie zumindest abschnittsweise parallel zu den Kettfäden und/oder parallel zu den Schussfäden verläuft, kann dadurch besonders gut sichergestellt werden, dass das Verkleidungsteil im Fall einer Airbagauslösung kontrolliert längs der Aufreißlinie aufreißt, um ein dementsprechend kontrolliertes Aufreißen der Airbagabdeckung zu ermöglichen.

Unabhängig davon, was für ein Textil im Einzelnen für die Verstärkungsschicht verwendet wird, sollte darauf geachtet werden, dass dieses in einer Richtung senkrecht zur Schichtebene nicht oder jedenfalls deutlich schlechter reißt als längs einer Reißlinie - insbesondere längs dermindestens einen bevorzugten Reichrichtung - in der Schichtebene. Gewebe sind daher weit besser geeignet als z.B. Vliesstoffe oder Gewirke, die aufgrund einer weitgehenden Isotropie auch in z-Richtung reißen können (x-Richtung und y-Richtung seien hier als die Schichtebene aufspannend definiert). Das Reißen in z-Richtung soll - insbesondere auch beim Auftreten von Zug- und Scherkräften, wie Sie bei einer Airbagauslösung zu erwarten sind - letztlich aus dem gleichen Grund vermieden werden wie das Lösen der Klebeverbindung zwischen Verstärkungsschicht und Dekorschicht, damit die - großflächig sehr dünne - Dekorschicht nämlich kontrolliert nur dort reißt, wo die darunterliegenden Schichten geschwächt sind und an anderen Stellen durch die darunterliegenden Schichten hinreichende Unterstützung erfährt.

Die Reißfestigkeit des Verbunds bei einer Belastung senkrecht zur bevorzugten Reißrichtung oder senkrecht zu mindestens einer der bevorzugten Reißrichtungen beträgt vorzugsweise weniger als 880 N/5cm. Besonders bevorzugt hat diese Reißfestigkeit einen Wert kleiner als 700 N/5cm. Typischerweise ist diese Reißfestigkeit größer als 380 N/5cm.

Die Verstärkungsschicht kann z.B. so gewählt werden, dass ihre Reißfestigkeit bei einer Belastung senkrecht zur bevorzugten Reißrichtung oder senkrecht zu mindestens einer der bevorzugten Reißrichtungen kleiner als 300 N/5cm ist. Vorzugsweise beträgt die Reißfestigkeit der Verstärkungsschicht bei einer Belastung senkrecht zu zumindest einer der bevorzugten Reißrichtungen sogar nicht mehr als 180 N/5cm. Typischerweise ist diese Reißfestigkeit der Verstärkungsschicht jedoch größer als 90 N/5cm.

Die Dicke der Dekorschicht kann zum Beispiel zwischen 0,5 mm und 0,7 mm betragen. Dazu kann ein Ausgangsmaterial für die Dekorschicht gleichmäßig in seiner Dicke reduziert werden. Die Verstärkungsschicht kann bei typischen Ausführungen eine Dicke von beispielsweise zwischen 0,6 mm und 0,4 mm haben.

Mit der vorliegenden Erfindung wird auch ein Verfahren zur Herstellung eines Verkleidungsteils mit einer Airbagabdeckung zur Verfügung gestellt. Dieses Verfahren beinhaltet die Schritte der Reduzierung einer Dicke einer Dekorschicht aus Leder, des Weiteren das Verkleben der Dekorschicht mit einer Verstärkungsschicht zu einem Verbund, in dem sowohl die Dekorschicht als auch die Verstärkungsschicht jeweils eine konstante Dicke haben, ferner das Aufbringen einer Haptikschicht auf einen Träger, das Vorsehen einer Schwächung entlang einer die Airbagabdeckung begrenzenden Aufreißlinie in dem Träger und in der Haptikschicht, sowie Aufbringen des Verbunds aus Dekorschicht und Verstärkungsschicht auf die Haptikschicht. So erhält man mit verhältnismäßig geringem Aufwand ein Verkleidungsteil mit einer Airbagabdeckung, dass den oben skizzierten Anforderungen genügt. Dieses Verfahren ist insbesondere zur Herstellung eines Verkleidungsteils nach zuvor beschriebener Art geeignet.

In einer vorteilhaften Ausgestaltung des erfindungsgemäßen Verfahrens wird der Verbund so auf die Haptikschicht aufgebracht, dass eine bevorzugte Reißrichtung oder eine von zwei bevorzugten Reißrichtungen der Verstärkungsschicht zumindest in einem Abschnitt parallel zur Aufreißlinie verläuft.

Erfindungsgemäß wird der Verbund als Teil eines größeren Oberflächendekors auf die Haptikschicht aufgebracht. Dieser Teil erstreckt sich nur über einen Teilbereich des Verkleidungsteils, und das Oberflächendekor wird in mindestens einem an diesen Teil angrenzenden Bereich durch eine einzelne Lage aus Leder gebildet, wobei die Lage eine Dicke hat, die einer Dicke des Verbunds entspricht.

In einem bevorzugten Verfahren wird der Verbund vor dem Aufbringen auf die Haptikschicht mit der Lage verbunden, vorzugsweise durch vernähen.

Vorzugsweise wird die Dicke der Dekorschicht vor dem Verkleben mit der Verstärkungsschicht auf einen konstanten Wert zwischen 0,5 mm und 0,7 mm reduziert.

Zusammengefasst werden mit den hier vorgeschlagenen Ausführungen eines Verkleidungsteils mit lederner Dekorschicht insbesondere folgende Vorteile erzielt:
- Schon die Herstellung des Verbunds aus geschwächtem Leder und Textilschicht ist einfach und kostengünstig.
- Der Verbund aus lederner Dekorschicht und der Verstärkungsschicht bzw. Textilschicht weist keine lokale Schwächung auf, weder im Textil, noch im Leder, was im verglichen zu herkömmlichen Lösungen mindestens einen Arbeitsschritt erspart.
- Die Verbundoberfläche besteht aus Leder, das keine lokalen Alterungserscheinungen zeigen kann, durch die eine Aufreißlinie mit der Zeit sichtbar werden könnte.
- Die Zugkraft bzw. Reißfestigkeit des Verbundmaterials ist derart, dass sich der Airbag öffnen kann, und zwar trotz der Verwendung des Naturprodukts Leder für die Dekorschicht und trotz des Fehlens einer lokalen Schwächung in dieser Dekorschicht. Dieser Vorteil ist von großer Bedeutung, weil das Naturprodukt Leder nie ganz homogene Eigenschaften hat und auch von Haut zu Haut und damit von Exemplar zu Exemplar des Verkleidungsteils eines bestimmten Typs immer Stabilitätsunterschiede auftreten werden. Die Realisierung einer kontrollierbaren Aufreißlinie in einem Verkleidungsteil mit Lederoberfläche bedeutet also die Überwindung einer besonderen Schwierigkeit.
- Das Aufkaschieren dieses Verbunds erfordert weniger Aufwand bei der Herstellung des Bauteils, da keine Reißlinien übereinandergelegt werden müssen.

Der hier beschriebene Verbund aus Dekorschicht und Verstärkungsschicht ist nach alledem also besonders gut geeignet für die Verwendung zum Kaschieren einer Airbagabdeckung.

Ausführungsbeispiele der Erfindung werden anhand der beigefügten Zeichnungen erläutert. In den Figuren zeigt:
Fig. 1 einen Querschnitt durch ein Verkleidungsteil gemäß einer Ausführungsform der Erfindung,
Fig. 2 eine Aufsicht auf einen Ausschnitt dieses Verkleidungsteils und
Fig. 3 eine Aufsicht auf einen Ausschnitt eines Verkleidungsteils gemäß einer anderen Ausführungsform der Erfindung.

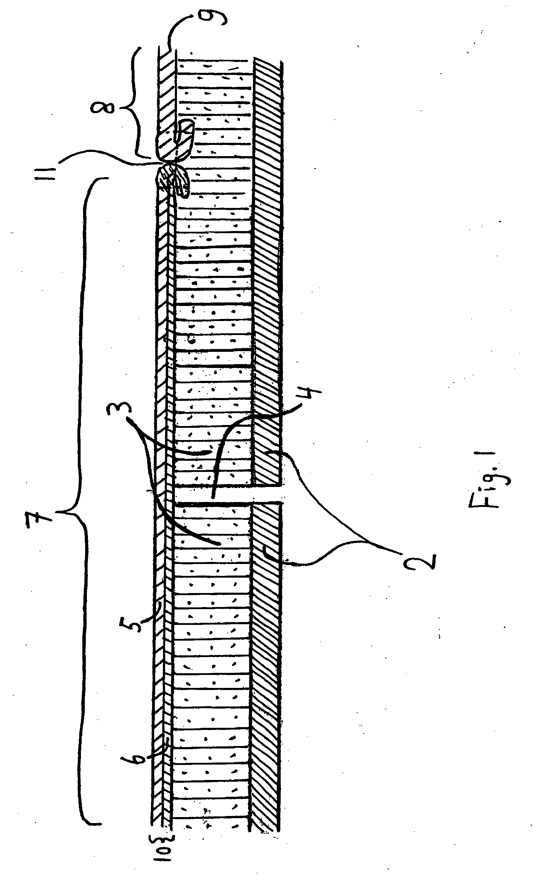

Fig. 1 zeigt einen Querschnitt eines Verkleidungsteils. Das Verkleidungsteil umfasst einen Träger 2 aus Kunststoff, bei dem es sich um eine Instrumententafel eines Kraftfahrzeugs handelt, und eine z.B. aus einem Gewirke oder einem geschäumten Material gebildete Haptikschicht 3. Der Träger 2 und die Haptikschicht 3 sind entlang einer die Airbagabdeckung begrenzenden Aufreißlinie 4 geschwächt. An einer Sichtseite weist das Verkleidungsteil ein Oberflächendekor auf. Innerhalb eines Teilbereichs 7 wird das Oberflächendekor an der Sichtseite durch eine vollflächig auf eine Dicke von ca. 0,6 mm ausgedünnte Dekorschicht 5 aus Leder gebildet. Zwischen der Dekorschicht 5 und der Haptikschicht 3 ist zusätzlich eine Verstärkungsschicht 6 mit einer Dicke von ca. 0,5 mm angeordnet, die mit der Dekorschicht 5 verklebt ist und so mit dieser einen Verbund 10 bildet. Bei der Verstärkungsschicht 6 handelt es sich um ein Gewebe. Die Dekorschicht 5 und die Verstärkungsschicht 6 erstrecken sich nur über den Teilbereich 7 des Verkleidungsteils. In einem an den Teilbereich 7 angrenzenden Bereich 8 wird das Oberflächendekor durch eine Lage 9 gebildet, die dort auf der Haptikschicht 3 aufliegt. Auch die Lage 9 besteht aus Leder, vorzugsweise aus dem gleichen - nur in seiner Dicke weniger weit herunter gespalteten - Leder wie die Dekorschicht 5. Die Dicke der Lage 9 entspricht hierbei der Dicke des Verbunds aus der Dekorschicht 5 und der Verstärkungsschicht 6 und beträgt etwa 1,1 mm. Der Verbund 10 hat eine geringere Reißfestigkeit als die Lage 9.

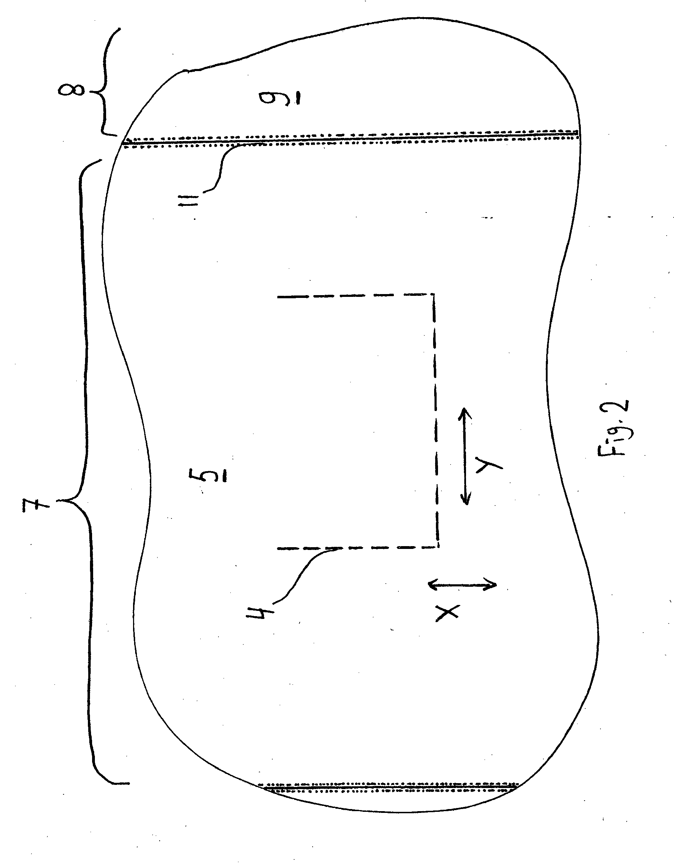

Fig. 2 zeigt eine Aufsicht des Verkleidungsteils. Zu erkennen ist dort der Teilbereich 7, der die Airbagabdeckung enthält. Die eine Airbagklappe bildende Airbagabdeckung wird an drei Seiten von der Aufreißlinie 4 begrenzt. Die Aufreißlinie 4 ist hier gestrichelt dargestellt. Der Verbund 10 ist mit der angrenzenden Lage 9 vernäht. Eine Naht 11 bildet also eine Grenze zwischen dem Teilbereich 7 und dem angrenzenden Bereich 8. Wie in Fig. 2 angedeutet ist, können in ähnlicher Weise auch weitere Teile des Oberflächendekors an dem Verbund aus Dekorschicht 5 und Verstärkungsschicht 6 angenäht sein.

Die Verstärkungsschicht 6 besteht aus einem Gewebe dessen Kett- und Schussfäden zwei bevorzugte Reißrichtungen definieren, die in Fig. 2 jeweils durch einen Doppelpfeil X bzw. Y gekennzeichnet sind. Längs dieser Reißrichtungen kann die Verstärkungsschicht 6 leichter reißen als längs anderer Richtungen. Die Reißfestigkeit des Verbunds 10 bei einer Belastung in Richtung der Schuss- oder Kettfäden beträgt 650 N/5cm bzw. 630 N/5cm. Die Reißfestigkeit der Verstärkungsschicht 6 bei einer Belastung in Richtung der Schuss- oder Kettfäden beträgt 220 N/5cm bzw. 110 N/5cm. Wie in Fig. 2 erkennbar ist, verläuft die Aufreißlinie 4 abschnittsweise jeweils parallel zu einer der bevorzugten Reißrichtungen X oder Y. Im Beispiel hat die Aufreißlinie 4 einen U-förmigen Verlauf.

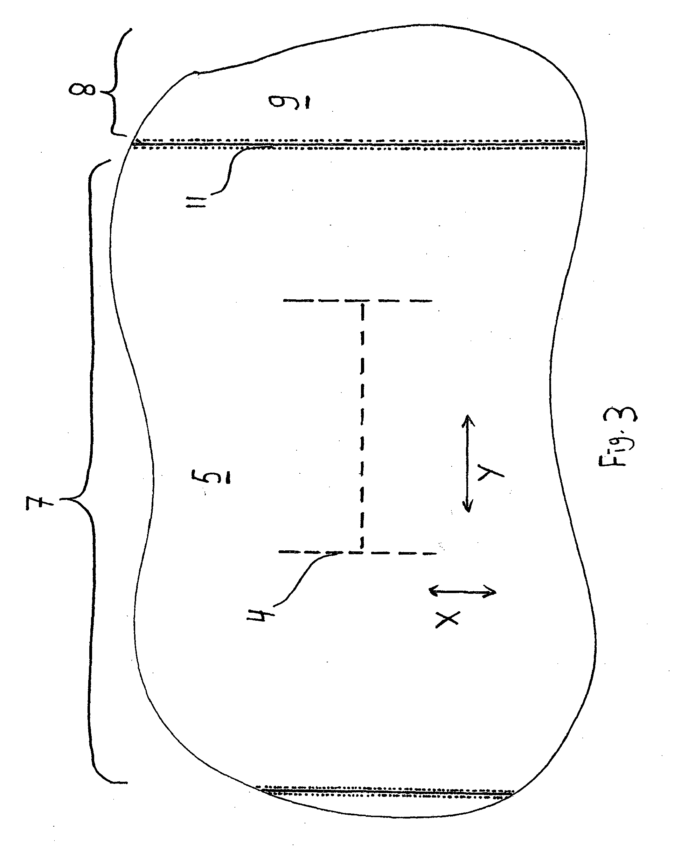

Fig. 3 zeigt eine Aufsicht eines Verkleidungsteils gemäß einer anderen Ausführungsform, die sich nur dadurch von dem zuvor beschriebenen Ausführungsbeispiel unterscheidet, dass die Aufreißlinie 4 einen anderen Verlauf hat. Wiederkehrende Merkmale sind in dieser Figur mit den gleichen Bezugszeichen versehen wie in den vorangegangenen Figuren 2 und 3. Die Aufreißlinie 4 hat hier einen H-förmigen Verlauf, so dass die Airbagabdeckung in diesem Fall eine zweiflügelige Airbagklappe bildet. Die Schussfäden liegen parallel zur mittleren Linie der H-förmigen Aufreißlinie, also in Y-Richtung.

Alternativ zu den in Fig. 2 und Fig. 3 gezeigten U- bzw. H-förmigen Verläufen der Aufreißlinie 4 sind auch Airbagklappen mit anders verlaufenden Begrenzungen denkbar.

Die in den Figuren gezeigten Verkleidungsteile werden hergestellt, indem die Dicke der Dekorschicht 5 zunächst auf etwa 0,6 mm reduziert wird. Anschließend wird die Dekorschicht 5 mit der Verstärkungsschicht 6 zu dem Verbund 10 verklebt, in dem sowohl die Dekorschicht 5 als auch die Verstärkungsschicht 6 jeweils eine konstante Dicke haben, also ohne lokale Schwächungen ausgeführt sind. Hierbei ist eine Klebeverbindung zwischen Dekorschicht 5 und Verstärkungsschicht 6 so stark, dass der genannte Verbund 10 längs der Aufreißlinie 4 reißt, ohne dass sich die Klebeverbindung löst, wenn sich ein unter der Airbagabdeckung angeordnete Airbag öffnet. Der Verbund 10 wird mit der Lage 9 zu dem Oberflächendekor vernäht.

Auf den Träger 2 wird die Haptikschicht 3 aufgebracht, wobei eine Schwächung längs der Aufreißlinie 4 im Träger 2 und in der Haptikschicht 3 vorgesehen wird, beispielsweise durch Einschnitte oder Laserperforation. Anschließend wird das Oberflächendekor, bestehend aus dem genannten Verbund und der Lage 9, so auf die Haptikschicht 3 aufgebracht, dass der Verbund die Airbagklappe überdeckt.

Alternativ kann die Schwächung längs der Aufreißlinie 4 im Träger 2 und in der Haptikschicht 3 auch nach dem Aufbringen der Dekorschicht 5 und der Verstärkungsschicht 6 eingebracht werden.

## Patentansprüche

1. Verkleidungsteil mit einer Airbagabdeckung, insbesondere zur Verwendung in einem Kraftfahrzeug, umfassend einen Träger (2) und eine Haptikschicht (3), die entlang einer die Airbagabdeckung begrenzenden Aufreißlinie (4) geschwächt sind, und eine den Träger (2) und die Haptikschicht (3) überdeckende Dekorschicht (5) aus Leder, wobei zusätzlich zwischen der Haptikschicht (3) und der Dekorschicht (5) eine Verstärkungsschicht (6) angeordnet ist, wobei die Dekorschicht (5) und die Verstärkungsschicht (6) beide eine konstante Dicke aufweisen,
**dadurch gekennzeichnet,**
**dass** sich die genannte Dekorschicht (5) und die Verstärkungsschicht (6) nur über einen Teilbereich (7) des Verkleidungsteils erstrecken, wobei das Verkleidungsteil ein über dem Träger (2) und der Haptikschicht (3) angeordnetes Oberflächendekor aufweist, das in diesem Teilbereich (7) durch die genannte Dekorschicht (5) mit der Verstärkungsschicht (6) und in mindestens einem an den Teilbereich (7) angrenzenden Bereich (8) durch eine einzelne Lage aus Leder (9) gebildet ist, wobei diese Lage (9) eine Dicke hat, die einer Dicke eines aus der genannten Dekorschicht (5) und der Verstärkungsschicht (6) gebildeten Verbunds (10) entspricht.

2. Verkleidungsteil gemäß Anspruch 1, **dadurch gekennzeichnet, dass** der Verbund (10) aus Verstärkungsschicht (6) und Dekorschicht (5) eine geringere Reißfestigkeit hat als die genannte Lage (9).

3. Verkleidungsteil gemäß einem der Ansprüche 1 oder 2, **dadurch gekennzeichnet, dass** die Verstärkungsschicht (6) mindestens eine bevorzugte Reißrichtung aufweist, längs derer sie leichter einreißt als längs anderer Richtungen, wobei die Aufreißlinie (4) zumindest in einem Abschnitt parallel zur bevorzugten Reißrichtung oder parallel zu einer der bevorzugten Reißrichtungen verläuft.

4. Verkleidungsteil gemäß Anspruch 3 **dadurch gekennzeichnet, dass** der Verbund (10) aus Dekorschicht (5) und Verstärkungsschicht (6) bei einer Belastung senkrecht zur bevorzugten Reißrichtung oder senkrecht zu mindestens einer der bevorzugten Reißrichtungen eine Reißfestigkeit hat, die kleiner als 880 N/5cm ist, und/oder dass die Verstärkungsschicht (6)) bei einer Belastung senkrecht zur bevorzugten Reißrichtung oder senkrecht zu mindestens einer der bevorzugten Reißrichtungen eine Reißfestigkeit hat, die kleiner als 300 N/5cm ist.

5. Verkleidungsteil gemäß einem der Ansprüche 1 bis 4, **dadurch gekennzeichnet, dass** die Dekorschicht (5) und die Verstärkungsschicht (6) zu einem Verbund (10) verklebt sind.

6. Verkleidungsteil gemäß Anspruch 5, **dadurch gekennzeichnet, dass** eine Klebeverbindung zwischen der Dekorschicht (5) und der Verstärkungsschicht (6) so stark ist, dass der genannte Verbund (10) bei einer durch einen Airbagschuss verursachbaren Zugbelastung längs der Aufreißlinie (4) reißt, ohne dass sich die Klebeverbindung löst.

7. Verkleidungsteil gemäß einem der vorangegangenen Ansprüche, **dadurch gekennzeichnet, dass** die Verstärkungsschicht (6) eine Textilschicht ist, vorzugsweise ein Gewebe.

8. Verkleidungsteil gemäß einem der voranstehenden Ansprüche, **dadurch gekennzeichnet, dass** die Dicke der Dekorschicht (5) zwischen 0,5 mm und 0,7 mm beträgt und die Dicke der Verstärkungsschicht (6) zwischen 0,6 mm und 0,4 mm beträgt.

9. Verfahren zur Herstellung eines Verkleidungsteils mit einer Airbagabdeckung, umfassend folgende Schritte:
- Reduzieren einer Dicke einer Dekorschicht (5) aus Leder,
- Verkleben der Dekorschicht (5) mit einer Verstärkungsschicht (6) zu einem Verbund (10), in dem sowohl die Dekorschicht (5) als auch die Verstärkungsschicht (6) jeweils eine konstante Dicke haben,
- Aufbringen einer Haptikschicht (3) auf einen Träger (2),
- Vorsehen einer Schwächung entlang einer die Airbagabdeckung begrenzenden Aufreißlinie (4) in dem Träger (2) und in der Haptikschicht (3),
- Aufbringen des Verbunds (10) aus Dekorschicht (5) und Verstärkungsschicht (6) auf die Haptikschicht (3), wobei der Verbund (10) als Teil eines Oberflächendekors auf die Haptikschicht (3) aufgebracht wird, so dass sich dieser Teil nur über einen Teilbereich (7) des Verkleidungsteils erstreckt, wobei das Oberflächendekor in mindestens einem an diesen Teil angrenzenden Bereich (8) durch eine einzelne Lage (9) aus Leder gebildet wird, wobei die Lage (9) eine Dicke hat, die einer Dicke des Verbunds (10) entspricht.

10. Verfahren nach Anspruch 9, wobei der Verbund (10) so auf die Haptikschicht (3) aufgebracht wird, dass eine bevorzugte Reißrichtung oder eine von zwei bevorzugten Reißrichtungen der Verstärkungsschicht zumindest in einem Abschnitt parallel zur Aufreißlinie (4) verläuft.

11. Verfahren nach Anspruch 9 oder 10, wobei der Verbund (10) vor dem Aufbringen auf die Haptikschicht (3) mit der genannten Lage (9) verbunden wird, vorzugsweise durch Vernähen.

12. Verfahren nach einem der Ansprüche 9 bis 11, bei dem die Dicke der Dekorschicht (5) vor dem Verkleben mit der Verstärkungsschicht (6) auf einen konstanten Wert zwischen 0,5 mm und 0,7 mm reduziert wird.

13. Verfahren gemäß einem der Ansprüche 9 bis 12 zur Herstellung eines Verkleidungsteils gemäß einem der Ansprüche 1 bis 8.

## Claims

1. A trim part with an airbag cover, in particular for use in a motor vehicle, comprising a carrier (2) and a haptics layer (3) which are weakened along a tear line (4) delimiting the airbag cover, and a decor layer (5) of leather which covers the carrier (2) and the haptics layer (3), wherein additionally a reinforcement layer (6) is arranged between the haptics layer (3) and the decor layer (5), wherein the decor layer (5) and the reinforcement layer (6) both have a constant thickness, **characterised in that** the mentioned decor layer (5) and the reinforcement layer (6) only extend over a part region (7) of the trim part, wherein the trim part comprises a surface decor which is arranged over the carrier (2) and the haptics layer (3) and which in this part region (7) is formed by the mentioned decor layer (5) with the reinforcement layer (6) and in at least a region (8) adjacent the part region (7) by a ply of leather (9), wherein this ply (9) has a thickness which corresponds to a thickness of a composite (10) formed from the mentioned decor layer (5) and the reinforcement layer (6).

2. A trim part according to claim 1, **characterised in that** the composite (10) of the reinforcement layer (6) and the decor layer (5) has a lower tear strength than the mentioned ply (9).

3. A trim part according to one of the claims 1 or 2, **characterised in that** the reinforcement layer (6) has at least one preferred tear direction, along which it tears more easily than along other directions, wherein the tear line (4) at least in a section runs parallel to the preferred tear direction or parallel to one of the preferred tear directions.

4. A trim part according to claim 3, **characterised in that** the composite (10) of the decor layer (5) and reinforcement layer (6), with a loading perpendicular to the preferred tear direction or perpendicular to at least one of the preferred tear directions has a tear strength which is smaller than 880 N/5cm, and/or that the reinforcement layer (6), with a loading perpendicular to the preferred tear direction or perpendicular to at least one of the preferred tear directions, has a tear strength which is smaller than 300 N/5cm

5. A trim part according to one of the claims 1 to 4, **characterised in that** the decor layer (5) and the reinforcement layer (6) are bonded into a composite (10).

6. A trim part according to claim 5, **characterised in that** a bonding connection between the decor layer (5) and the reinforcement layer (6) is so strong, that the mentioned composite (10) with a tensile loading causable by an airbag release, tears along the tear line (4) without the bonding connection releasing.

7. A trim part according to one of the preceding claims, **characterised in that** the reinforcement layer (6) is a textile layer, preferably a woven fabric.

8. A trim part according to one of the preceding claims, **characterised in that** the thickness of the decor layer (5) is between 0.5 and 0.7 mm and the thickness of the reinforcement layer (6) is between 0.6 and 0.4 mm.

9. A method for manufacturing a trim part with an airbag cover, comprising the following steps:
- reducing a thickness of a decor layer (5) of leather,
- bonding the decor layer (5) to a reinforcement layer (6) into a composite (10), in which the decor layer (5) as well as the reinforcement layer (6) in each case have a constant thickness,
- applying a haptics layer (3) onto a carrier (2),
- providing a weakening along a tear line (4) delimiting the airbag cover, in the carrier (2) and in the haptics layer (3),
- applying the composite (10) of the decor layer (5) and reinforcement layer (6) onto the haptics layer (3), wherein the composite (10) is deposited as part of a surface decor onto the haptics layer (3), so that this part only extends over a part region (7) of the trim part, wherein the surface decor in at least one region (8) adjacent this part is formed by a ply (9) of leather, wherein the ply (9) has thickness which corresponds to a thickness of the composite (10).

10. A method according to claim 9, wherein the composite (10) is applied onto the haptics layer (3) such that a preferred tear direction or one of two preferred tear directions of the reinforcement layer at least in a section runs parallel to the tear line (4).

11. A method according to claim 9 or 10, wherein the composite (10) is connected to the mentioned ply (9), preferably by way of sewing, before the application onto the haptics layer (3).

12. A method according to one of the claims 9 to 11, with which the thickness of the decor layer (5) is reduced to a constant value between 0.5 and 0.7 mm, before the bonding to the reinforcement layer (6).

13. A method according to one of the claims 9 to 12 for manufacturing a trim part according to one of the claims 1 to 8.

## Revendications

1. Élément d'habillage avec un cache pour coussin gonflable, destiné en particulier à être utilisé dans un véhicule automobile, comportant un support (2) et une couche haptique (3), qui est affaiblie le long d'une ligne de déchirure (4) délimitant le cache pour coussin gonflable, et une couche décorative (5) en cuir recouvrant le support (2) et la couche haptique (3), une couche de renfort (6) étant disposée, en plus, entre la couche haptique (3) et la couche décorative (5), ladite couche décorative (5) et ladite couche de renfort (6) ayant toutes deux une épaisseur constante, **caractérisé en ce que**
ladite couche décorative (5) et ladite couche de renfort (6) s'étendent seulement sur une zone partielle (7) de l'élément d'habillage, ledit élément d'habillage comportant un décor de surface, qui est disposé au-dessus du support (2) et de la couche haptique (3) et qui est formé, dans cette zone partielle (7), par ladite couche décorative (5) avec la couche de renfort (6) et, dans au moins une zone (8) adjacente à la zone partielle (7), par une couche individuelle (9) en cuir, cette couche (9) ayant une épaisseur qui correspond à une épaisseur d'un assemblage (10) constitué de ladite couche décorative (5) et de ladite couche de renfort (6).

2. Élément d'habillage selon la revendication 1, **caractérisé en ce que** l'assemblage (10) constitué de la couche de renfort (6) et de la couche décorative (5) a une résistance à la déchirure plus faible que celle de ladite couche (9).

3. Élément d'habillage selon les revendications 1 ou 2, **caractérisé en ce que** la couche de renfort (6) comporte au moins une direction de déchirure préférée, le long de laquelle elle se déchire plus aisément que le long d'autres directions, la ligne de déchirure (4) s'étendant au moins sur un tronçon parallèlement à la direction de déchirure préférée ou parallèlement à une des directions de déchirure préférées.

4. Élément d'habillage selon la revendication 3, **caractérisé en ce que** l'assemblage (10) constitué de la couche décorative (5) et de la couche de renfort (6), en présence d'une sollicitation perpendiculaire à la direction de déchirure préférée ou perpendiculaire à au moins une des directions de déchirure préférées, a une résistance à la déchirure inférieure à 880 N/5cm, et/ou **en ce que** la couche de renfort (6), en présence d'une sollicitation perpendiculaire à la direction de déchirure préférée ou perpendiculaire à au moins une des directions de déchirure préférées, a une résistance à la déchirure inférieure à 300 N/5cm.

5. Élément d'habillage selon l'une quelconque des revendications 1 à 4, **caractérisé en ce que** la couche décorative (5) et la couche de renfort (6) sont collées l'une à l'autre pour former un assemblage (10).

6. Élément d'habillage selon la revendication 5, **caractérisé en ce qu'**un assemblage collé entre la couche décorative (5) et la couche de renfort (6) est si fort que, en présence d'une sollicitation de traction pouvant être due à une projection du coussin gonflable, ledit assemblage (10) se déchire le long de la ligne de déchirure (4) sans que l'assemblage collé se désolidarise.

7. Élément d'habillage selon l'une quelconque des revendications précédentes, **caractérisé en ce que** la couche de renfort (6) est une couche textile, de préférence un tissu.

8. Élément d'habillage selon l'une quelconque des revendications précédentes, **caractérisé en ce que** l'épaisseur de la couche décorative (5) se situe entre 0,5 mm et 0,7 mm, et l'épaisseur de la couche de renfort (6) se situe entre 0,6 mm et 0,4 mm.

9. Procédé pour la réalisation d'un élément d'habillage avec un cache pour coussin gonflable, comportant les étapes suivantes :
- diminuer une épaisseur d'une couche décorative (5) en cuir,
- coller la couche décorative (5) à une couche de renfort (6) pour former un assemblage (10), dans lequel tant la couche décorative (5) que la couche de renfort (6) ont chacune une épaisseur constante,
- déposer une couche haptique (3) sur un support (2),
- prévoir dans le support (2) et dans la couche haptique (3) un affaiblissement le long d'une ligne de déchirure (4) délimitant le cache pour coussin gonflable,
- déposer sur la couche haptique (3) l'assemblage (10) constitué de la couche décorative (5) et de la couche de renfort (6), ledit assemblage (10) étant déposé sur la couche haptique (3) sous la forme d'une partie d'un décor de surface, de telle sorte que cette partie s'étend seulement sur une zone partielle (7) de l'élément d'habillage, le décor de surface étant formé, dans au moins une zone (8) adjacente à cette partie, par une couche individuelle (9) en cuir, cette couche (9) ayant une épaisseur qui correspond à une épaisseur de l'assemblage (10).

10. Procédé selon la revendication 9, dans lequel l'assemblage (10) est déposé sur la couche haptique (3) de telle sorte qu'une direction de déchirure préférée ou une parmi deux directions de déchirure préférées de la couche de renfort s'étend au moins sur un tronçon parallèle à la ligne de déchirure (4).

11. Procédé selon la revendication 9 ou 10, dans lequel l'assemblage (10), avant d'être déposé sur la couche haptique (3), est relié, de préférence par couture, à ladite couche (9).

12. Procédé selon l'une quelconque des revendications 9 à 11, dans lequel l'épaisseur de la couche décorative (5), avant d'être collée à la couche de renfort (6), est réduite à une valeur constante entre 0,5 mm et 0,7 mm.

13. Procédé selon l'une quelconque des revendications 9 à 12 permettant la réalisation d'un élément d'habillage selon l'une quelconque des revendications 1 à 8.
